# FASCICULE DE BREVET EUROPEEN

(11) **EP 3 135 085 B1**
(45) Date de publication et mention de la délivrance du brevet: **25.12.2019**
(21) Numéro de dépôt: 16306089.0
(22) Date de dépôt: 29.08.2016
(51) Int. Cl.: A01B 33/08, A01B 49/06, A01C 19/00

(54) **MACHINE AGRICOLE AVEC UN DISPOSITIF DE TRANSMISSION DE MOUVEMENT SECONDAIRE**
LANDWIRTSCHAFTLICHE MASCHINE MIT EINER SEKUNDÄREN BEWEGUNGSÜBERTRAGUNGSVORRICHTUNG
AGRICULTURAL MACHINE WITH A SECONDARY MOVEMENT TRANSMISSION DEVICE

(30) Priorité: 31.08.2015 FR 1558065
(43) Date de publication de la demande: 01.03.2017
(73) Titulaire: Kuhn SA (Societe Anonyme), 67700 Saverne (FR)
(72) Inventeur: POTIER, Philippe, 67290 Zittersheim (FR); TEITGEN, Hervé, 57370 Phalsbourg (FR)
(74) Mandataire: Nuss, Laurent

(56) Documents cités:
- EP-A1- 0 269 183
- DE-U1-202009 015 104
- DE-U1-202009 015 104
- FR-A1- 2 300 494
- FR-A1- 2 906 675

## Description

La présente invention concerne le domaine du machinisme agricole, en particulier des machines agricoles combinées ou associées, c'est-à-dire qui remplissent au moins deux fonctions, opérations ou travaux simultanément, normalement effectuées par au moins deux machines distinctes, ou des machines agricoles simples (monofonction) auxquelles peuvent être associés des équipements ou des outils animés additionnels, pouvant être déconnectés, voire démontés.

L'invention a plus particulièrement pour objet une machine agricole intégrant un dispositif de transmission secondaire avec démultiplication.

De nombreuses machines agricoles, qu'elles soient portées, semi-portées ou tractées, en particulier celles comportant des outils animés ou des mécanismes à actionner, sont de manière connue reliées à la prise de force ou de puissance du tracteur durant leur utilisation.

Ces machines comportent généralement un carter dans lequel est monté un arbre d'entrée recevant le couple délivré par la prise de force, ainsi que des engrenages ou des pignons de renvoi, associés à des axes ou des arbres, distribuant le couple au(x) outil(s) ou mécanisme(s) de la machine considérée.

Lorsqu'il est nécessaire d'entraîner des équipements ou des outils additionnels, faisant le cas échéant normalement partie d'une machine différente, il est nécessaire de disposer d'une source de puissance supplémentaire, dont les caractéristiques peuvent être différentes de celles de la machine considérée et de celles du mouvement transmis par l'arbre d'entrée. Tel est notamment le cas pour la vitesse. Il est alors nécessaire de prévoir un mécanisme additionnel de transformation du mouvement, généralement monté sur l'extrémité opposée de l'arbre d'entrée (extrémité non reliée à la prise de force), qui doit donc être débouchant.

Un exemple typique d'une telle machine agricole combinée est la herse rotative combinée à un semoir, qui permet de travailler le sol et de semer simultanément. Une telle machine, par exemple de la gamme COMBILINER de la demanderesse, comprend, d'une part, une herse comportant au moins un alignement transversal d'outils tournant autour d'axes verticaux et, à l'arrière, d'un rouleau permettant de régler la profondeur de travail et, d'autre part, un semoir avec sa trémie, ses socs et ses dispositifs de transport de graines. Le semoir est monté, éventuellement de manière amovible, sur le châssis de la herse.

Pour entraîner la turbine du semoir, qui permet le transport pneumatique des grains vers les socs, un boîtier multiplicateur (par exemple de rapport 2) est monté en sortie du carter (à l'opposé de la connexion à la prise de force) et une pompe hydraulique est flasquée sur ce boîtier.

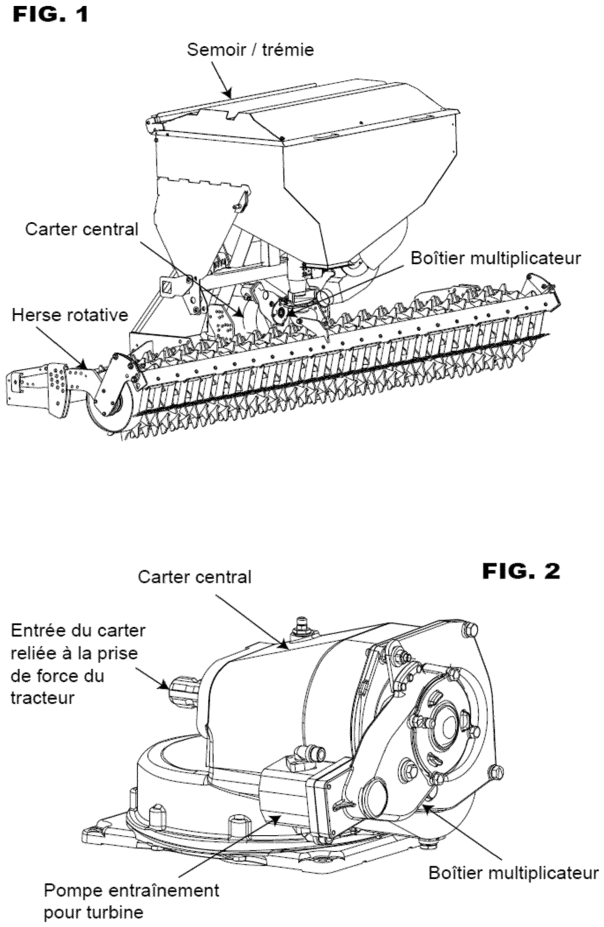

La figure 1 est une vue en perspective d'une telle machine combinée connue [herse rotative/semoir] et la figure 2 est une vue de détails, à une échelle différente, d'un carter équipé d'un boîtier multiplicateur entraînant une pompe hydraulique fixée sur ce dernier, faisant partie de la machine précitée.

Toutefois, cette solution connue présente un certain nombre d'inconvénients, à savoir : nécessité de disposer d'un arbre débouchant à l'arrière du carter ; encombrement longitudinal (dans la direction de l'arbre d'entrée), et éventuellement latéral, important ; possible interférence avec des parties mobiles de la herse, notamment le rouleau ; exposition aux chocs et aux agressions extérieures ; empilage d'éléments composites (carter, boîtier, pompe) dans la direction longitudinale.

Par le document EP-A-0 269 183, on connait une machine de travail du sol avec des outils rotatifs autour d'axes verticaux.

Ces outils rotatifs sont entrainés par l'intermédiaire de l'arbre de sortie d'une boîte d'engrenage comprenant deux arbres d'entrée pouvant être reliés sélectivement à la prise de force d'un tracteur et permettant un entrainement des outils dans des sens opposés.

L'un des arbres d'entrée se prolonge axialement à travers la boîte d'engrenage et fait saillie du côté opposé de cette boîte pour constituer un arbre d'entrainement d'un équipement secondaire de la machine.

Par le document FR-A-2 300 494, on connait une machine agricole à double fonction, à savoir de broyage d'engrais (paille, engrais verts) et de malaxage des terres pour l'ensemencement, et pouvant être attelée de manière réversible à un tracteur.

Cette machine connue comporte une boîte à engrenages avec deux arbres d'entrée opposés longitudinalement et pouvant être accouplés sélectivement à la prise de force du tracteur, en fonction du côté de la machine attelé au tracteur et dépendant de l'utilisation envisagée pour la machine. En fonction du sens d'attelage et donc du mode d'accouplement à la prise de force, les outils rotatifs tournent à des vitesses différentes et dans des directions différentes relativement au sens d'avance de la machine.

Aucun entrainement additionnel pour un équipement secondaire n'est prévu dans ce document.

Par le document FR-A-2 906 675, on connait un agencement complexe d'entrainement pour une unité de travail d'un outil ou d'une machine agricole, dans lequel un moteur entraine, par le biais d'une boîte primaire de transmission de moteur et d'un arbre parallèle à l'arbre du moteur, une boîte annexe de transmission d'unité de travail (par exemple un rotor de battage d'une moissonneuse-batteuse).

Le carter de cette dernière boîte annexe de transmission est décalé et saillant axialement et latéralement par rapport à la boîte primaire, formant ainsi un boîtier additionnel rapporté.

Par ailleurs, la boîte primaire de transmission présente des arbres de sorties secondaires arrangés axialement, avec des axes parallèles à l'axe de rotation de l'arbre de sortie moteur.

Les constructions proposées par ces trois documents présentent également au moins certains des inconvénients indiqués précédemment, en particulier en relation avec l'encombrement longitudinal.

La présente invention vise à surmonter au moins certains inconvénients majeurs précités, préférentiellement tous, en particulier dans le contexte d'une machine combinée herse rotative/semoir.

A cet effet, l'invention a pour objet une machine agricole pourvue d'au moins un outil entraîné et comprenant, d'une part, un arbre d'entrée monté rotatif dans un carter support et de protection, qui est destiné à être relié par une extrémité débouchant dudit carter à une prise de force d'un tracteur et qui fait partie d'une ligne de transmission de mouvement primaire, entraînant au moins ledit ou lesdits outil(s), et, d'autre part, un dispositif de transmission de mouvement secondaire avec démultiplication, relié cinématiquement à l'arbre d'entrée et pouvant entraîner au moins un équipement secondaire, outil annexe ou système de distribution/transmission de mouvement, ledit arbre d'entrée présentant un axe de rotation définissant une direction longitudinale, dans laquelle ledit dispositif de transmission secondaire est disposé dans le carter et comprend un arbre de sortie secondaire monté à rotation dans le carter et un mécanisme de transmission démultipliée reliant cinématiquement l'arbre d'entrée et l'arbre de sortie secondaire, une extrémité libre dudit arbre secondaire étant dirigée vers ou située au niveau d'une ouverture du carter, cette ouverture étant disposée latéralement par rapport à l'arbre d'entrée, et formée dans un côté latéral du carter, par rapport à la direction longitudinale définie par l'axe de rotation de l'arbre d'entrée.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 3 est une vue en perspective d'une machine combinée herse rotative/semoir en accord avec un premier mode de réalisation de l'invention ;
La figure 4 est une vue en perspective, à une échelle différente, d'un carter et de l'équipement annexe entraîné (ici une pompe hydraulique) faisant partie de la machine représentée figure 3 ;
Les figures 5A et 5B sont des vues partielles en coupe selon un plan passant par l'axe de l'arbre d'entrée du carter représenté figure 4, montrant les éléments constitutifs de la ligne de transmission de mouvement primaire et du dispositif de transmission de mouvement secondaire, l'équipement secondaire étant respectivement connecté et déconnecté dudit carter, et,
Les figures 6A et 6B sont des vues à une échelle agrandie des détails A et B de la figure 5.

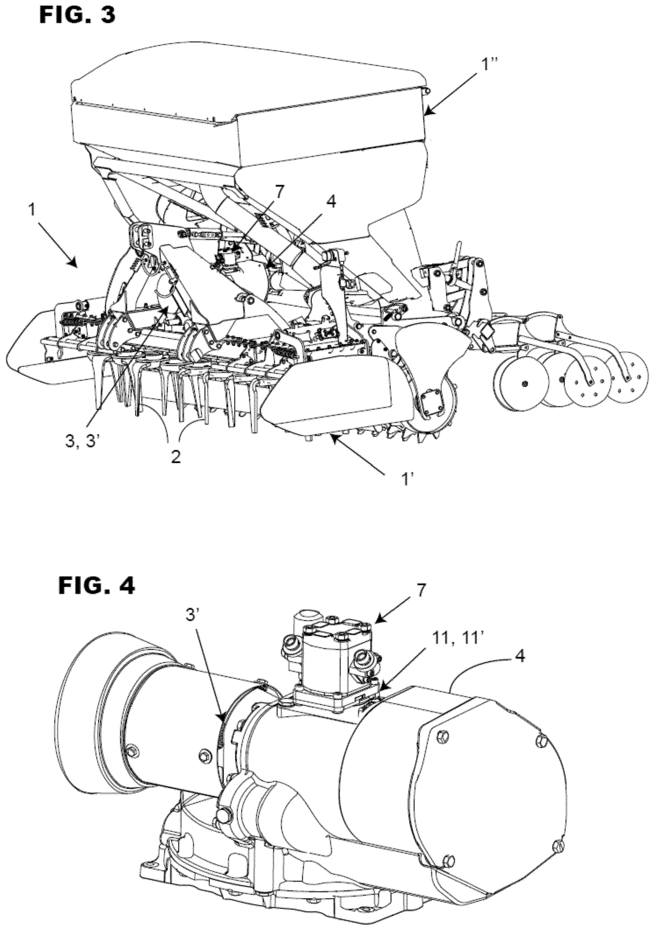

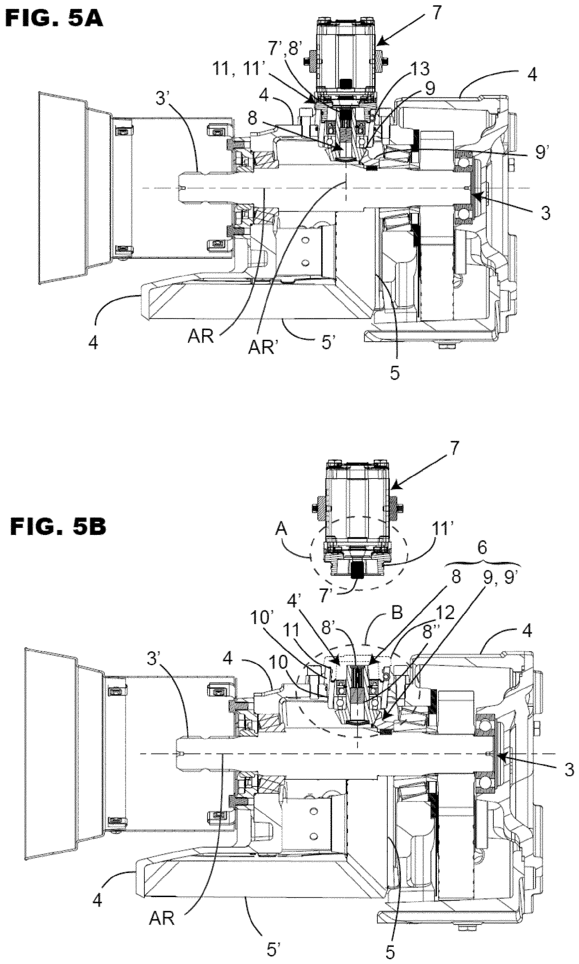

La figure 3, et partiellement les figures 4 et 5, illustrent une machine agricole 1 pourvue d'au moins un outil entraîné 2 et comprenant un arbre d'entrée 3 monté rotatif dans un carter support et de protection 4. Cet arbre d'entrée 3 est apte et destiné à être relié par une extrémité 3' débouchant dudit carter 4 à une prise de force d'un tracteur (non représenté) et fait partie d'une ligne 3, 5, 5' de transmission de mouvement primaire, entraînant au moins ledit ou lesdits outil(s) 2. Cette machine 1 comprend également un dispositif 6 de transmission de mouvement secondaire avec démultiplication, relié cinématiquement à l'arbre d'entrée 3 et pouvant entraîner au moins un équipement secondaire, outil annexe ou système secondaire (externe) de distribution/transmission de mouvement 7.

Comme le montrent les figures 5A et 5B, l'arbre d'entrée 3 est relié cinématiquement à un pignon de renvoi 5 et à un pignon de sortie 5', formant les composantes d'entrée de la ligne de transmission de mouvement primaire destiné à entraîner les outils 2 de la machine de base formée sur ces figures par la herse rotative 1'.

De plus, l'arbre d'entrée 3 présente un axe de rotation AR qui définit une direction longitudinale, pour cet arbre et pour le carter 4, normalement coïncident avec la direction d'avance de la machine 1 en utilisation.

Conformément à l'invention, le dispositif de transmission secondaire 6 est disposé dans le carter 4 et comprend un arbre de sortie secondaire 8 monté à rotation dans le carter 4 et un mécanisme de transmission démultipliée 9, 9' reliant cinématiquement l'arbre d'entrée 3 et l'arbre de sortie secondaire 8, une extrémité libre 8' dudit arbre secondaire 8 étant dirigée vers ou située au niveau d'une ouverture 4' du carter 4, cette ouverture 4' étant disposée latéralement par rapport à l'arbre d'entrée 3.

Grâce à l'invention, les composants opérationnels réalisant la démultiplication sont disposés intégralement dans le carter 1 et seule une extrémité 8' de l'arbre secondaire 8, tournant à la vitesse idoine, est située en-dehors de l'enceinte de protection constituée par ce carter 4. Ainsi, on aboutit à une solution complètement intégrée dans le carter 4 et ne nécessitant pas d'arbre d'entrée débouchant du côté opposé à son extrémité reliée à la prise de force. De plus, la prévision d'une ouverture 4' latérale pour le passage de l'arbre secondaire 8 permet de s'affranchir d'une augmentation de l'encombrement longitudinal du carter 4 du fait de la présence de l'équipement, de l'outil ou du système 7 accessoire ou secondaire. Il en résulte un carter compact et court longitudinalement, dépourvu de boîtier additionnel rapporté.

Plus précisément, l'ouverture 4' du carter 4 est avantageusement formée dans un côté latéral (de la paroi) de ce dernier, par rapport à la direction longitudinale définie par l'axe de rotation AR de l'arbre d'entrée 3.

En fait, comme le montrent les figures 3 à 5, le dispositif 6 est disposé dans l'encombrement longitudinal et préférentiellement latéral du carter 4 (par comparaison avec l'encombrement du carter 4 en l'absence de dispositif 6). Avantageusement, le dispositif 6 est situé également dans l'encombrement longitudinal de l'arbre d'entrée 3 qui fixe alors de manière déterminante la longueur dudit carter 4 dans lequel il est guidé en rotation.

Avantageusement, pour optimiser le ratio couple transmis/encombrement, et comme le montrent également les figures 5A et 5B, le mécanisme de transmission démultiplié 9, 9' est un mécanisme de transmission par engrènement, préférentiellement entre un premier élément denté 9 solidaire de l'arbre de sortie secondaire 8 et un second élément denté 9' solidaire de l'arbre d'entrée 3.

De plus, le rapport de démultiplication peut être fixé aisément par le simple dimensionnement relatif des deux éléments 9 et 9' et la fixation de leur rapport de transmission.

En accord avec un mode de réalisation préféré, le mécanisme de transmission démultipliée est constitué par un système à engrenage comprenant un pignon denté 9 formé ou monté sur l'arbre de sortie secondaire 8, préférentiellement au niveau d'une extrémité 8" de ce dernier, et une couronne dentée 9' formée ou montée sur l'arbre d'entrée 3, ledit pignon 9 et ladite couronne 9' en engagement mutuel présentant avantageusement un engrenage conique.

Toutefois, en fonction de l'arrangement de l'arbre secondaire 8 dans le carter 4 et par rapport à l'arbre d'entrée 3, ainsi que du volume disponible dans le carter 4, de la direction de sortie de mouvement secondaire et du rapport de transmission souhaité, au moins un élément d'engrenage supplémentaire peut éventuellement être prévu (solution non représentée).

Par ailleurs, l'engrenage peut, pour les mêmes raisons, également présenter une structure droite, et non pas conique.

En accord avec une caractéristique de l'invention, le carter 4 est pourvu d'un palier 10 de montage et de guidage en rotation de l'arbre de sortie secondaire 8, lequel se prolonge pour délimiter l'ouverture 4' dans laquelle s'étend l'extrémité libre 8' de l'arbre secondaire 8 destinée à être reliée en entraînement audit équipement secondaire, outil annexe ou système secondaire de distribution/transmission de mouvement 7.

Avantageusement, le palier 10 et l'arbre de sortie secondaire 8 sont décalés angulairement autour de l'axe de l'arbre d'entrée 3, avantageusement d'au moins 90°, préférentiellement d'environ 180° (cf. figures 5A et 5B), par rapport aux autres composantes 5, 5' de la ligne de transmission de mouvement primaire, reliées cinématiquement à l'arbre d'entrée 3 et logées dans le carter 4.

Ainsi, en regardant selon la direction de l'axe de l'arbre d'entrée 3, l'observateur pourra relever que les plans contenant les axes de l'arbre 8, d'une part, et des composantes 5, 5', d'autre part, forment entre eux un angle non nul, avantageusement d'au moins 90°, préférentiellement d'environ 180°.

L'arbre de sortie secondaire 8 et les composantes 5, 5' sont, par conséquent, disposés en des endroits séparés, préférentiellement de part et d'autre de l'arbre d'entrée 3, sur des faces opposées du carter 4.

Sur les figures 5A et 5B, qui correspondent à des vues en coupe selon un plan contenant l'axe AR de l'arbre d'entrée 3, ainsi que les axes de l'arbre 8 et du pignon conique 5' correspondant à la composante assurant la transmission du mouvement primaire vers l'extérieur du carter 4, on note que l'arbre 8 est situé à l'opposé (c'est-à-dire à 180°) des composantes 5, 5', par exemple respectivement en haut et en bas sur les figures 5A et 5B.

Ainsi, l'environnement autour de l'extrémité libre 8' de l'arbre de sortie secondaire 8 est dégagé et ne limite pas les possibilités de transmission de mouvement dans des directions différentes depuis ladite extrémité 8' (dispositions et arrangements variés des éléments transmettant le mouvement depuis l'extrémité 8').

De plus, l'arbre de sortie secondaire 8 et, le cas échéant, l'équipement 7 (en fonction de sa taille et de sa constitution), ainsi que les composantes 5, 5', tiennent dans l'encombrement longitudinal (selon l'axe AR de l'arbre d'entrée 3) du carter 4.

Pour faciliter son montage et son démontage, l'équipement secondaire, l'outil annexe ou le système secondaire de distribution/transmission de mouvement 7 est assemblé rigidement avec le carter 4 et solidarisé en rotation avec l'extrémité libre 8' de l'arbre secondaire 8 par l'intermédiaire d'un système de fixation rapide.

Plus précisément, il peut être prévu que l'équipement, outil ou système 7 secondaire ou annexe soit assemblé rigidement avec le carter 4 et accouplé avec l'arbre de sortie secondaire 8 par le biais d'une liaison mécanique avec double emboîtement, ladite liaison étant préférentiellement verrouillée, avantageusement automatiquement et/ou de manière amovible.

A titre de construction pratique avantageuse, il peut être prévu, comme le montrent les figures 5A et 5B, que l'ouverture 4' du carter 4, délimitée par un prolongement tubulaire coaxial 10' du palier 10 de montage avec guidage, comporte une partie 11 de montage par emboîtement, avec possibilité de verrouillage amovible, destinée à coopérer avec une partie complémentaire coopérant 11' de l'équipement, de l'outil ou du système 7. De même, l'extrémité libre 8' de l'arbre de sortie secondaire 8 peut avantageusement présenter une structure cannelée axialement, mâle ou femelle, pour un assemblage par emboîtement avec un arbre ou un manchon d'entrée 7' (également cannelé) de l'équipement, outil ou système 7 secondaire ou annexe.

Préférentiellement, le carter 4 et l'extrémité libre 8' de l'arbre secondaire 8 présentent des sites femelles (partie 11 du tube 10'/douille cannelée 8') d'assemblage par emboîtement avec des formations mâles complémentaires de partie 11' et d'arbre 7' de l'équipement, outil ou système 7 secondaire ou annexe.

Grâce à ces dispositions, on aboutit à la réalisation d'un système de raccordement rapide par double emboîtement, l'assemblage pouvant être verrouillé axialement et en rotation par une vis radiale ou une clavette à enclenchement automatique déverrouillable 13.

L'extrémité 8' de l'arbre secondaire 8 située dans l'ouverture latérale 4' du carter 4 est avantageusement au plus affleurant avec le plan formé par le bord extérieur du prolongement tubulaire 10'.

Le palier 10 avec guidage en rotation comprend, par exemple, plusieurs roulements montés dans un manchon rapporté de manière étanche dans une ouverture du carter 4, ce manchon définissant également le prolongement 10' et comportant le site 11.

L'équipement, l'outil ou le système de transmission de mouvement secondaire 7 peut ainsi, d'une part, être assemblé rigidement au carter 4 et, d'autre part, être assujetti en rotation à l'arbre de sortie secondaire 8.

Il est bien entendu possible d'exploiter directement le mouvement de rotation de l'arbre de sortie secondaire 8 en le transportant vers un outil ou un équipement additionnel amovible ou à fonctionnement optionnel, éventuellement avec distribution du mouvement et/ou après transformation mécanique dudit mouvement (animation d'outils multiples, production d'un mouvement de translation, nouvelle démultiplication, ...).

Toutefois, pour des raisons de flexibilité, d'adaptation et de facilité de transfert et de distribution de couple et de puissance, l'équipement secondaire 7 peut avantageusement consister en un moyen générateur de puissance, tel qu'une pompe hydraulique ou pneumatique ou une génératrice électrique.

L'assemblage amovible de l'équipement secondaire 7, par exemple par l'intermédiaire d'un système de fixation rapide 13, préférentiellement sans nécessiter l'usage d'outil (blocage par vis tangentielle), peut, après démontage, laisser l'ouverture 4' béante (exposition de l'arbre secondaire 8 à l'environnement extérieur ; possible introduction de poussière, de terre, d'eau ; risque d'accident du fait d'un élément tournant non recouvert).

Pour pallier cet inconvénient, la machine agricole 1 peut comprendre un moyen 12 d'obturation de l'ouverture 4' du carter 4 (du côté extérieur de ce dernier), tel qu'un couvercle à fermeture étanche ou analogue, sous forme d'élément séparé, relié ou non de manière flexible au carter 4, ou solidaire dudit carter 4, et apte à recouvrir également l'extrémité libre 8'.

En fonction des possibilités d'accessibilité au carter 4, de l'occupation de son environnement extérieur proche et/ou de la localisation de l'équipement, de l'outil ou des moyens additionnels à entraîner, il peut être souhaitable d'arranger l'arbre de sortie secondaire 8 de différentes façons, par rapport à l'arbre d'entrée 3 et/ou au carter 4.

Ainsi, selon une variante préférée illustrée aux figures 3, 4 et 5, l'arbre de sortie secondaire 8 s'étend perpendiculairement à l'arbre d'entrée 3, pour un montage radial de l'équipement, de l'outil ou du système 7, c'est-à-dire sur un côté latéral du carter 4.

Sur les figures 5A et 5B, on relève que les axes de rotation respectifs AR et AR' des arbres 3 et 8 forment entre eux un angle droit. Néanmoins, en fonction des nécessités de montage ou d'optimisation d'un arrangement par exemple, l'angle entre ces deux axes peut être différent de 90° et varier entre 45° et 135°, par exemple, avec une modification adaptée du palier 10 et des engrenages 9 et 9'.

Pour la construction illustrée à la figure 5B, l'homme du métier peut remarquer que non seulement le carter 4 est court du fait d'un arbre 3 non débouchant à l'arrière, mais qu'en plus la réalisation intégrée et compacte du dispositif 6 de transmission de mouvement secondaire permet de faire tenir ce dernier non seulement dans l'encombrement longitudinal, mais également dans l'encombrement radial ou latéral initial du carter 4, c'est-à-dire un carter 4 n'intégrant pas de dispositif 6.

Le montage du dispositif de transmission secondaire 6 dans le carter 4 peut être de nature amovible ou interchangeable (avec l'ensemble de ses composantes 8, 9, 10, 10', 11, 11'), permettant ainsi de modifier la configuration de transmission de mouvement et de proposer des variantes constructives du carter 4 avec ou sans ce dispositif 6, sur la base d'une même structure du reste du carter 4, de l'arbre d'entrée 3 et des composantes du dispositif de transmission primaire 5, 5' (couvercle 12 pouvant obturer l'ouverture 4').

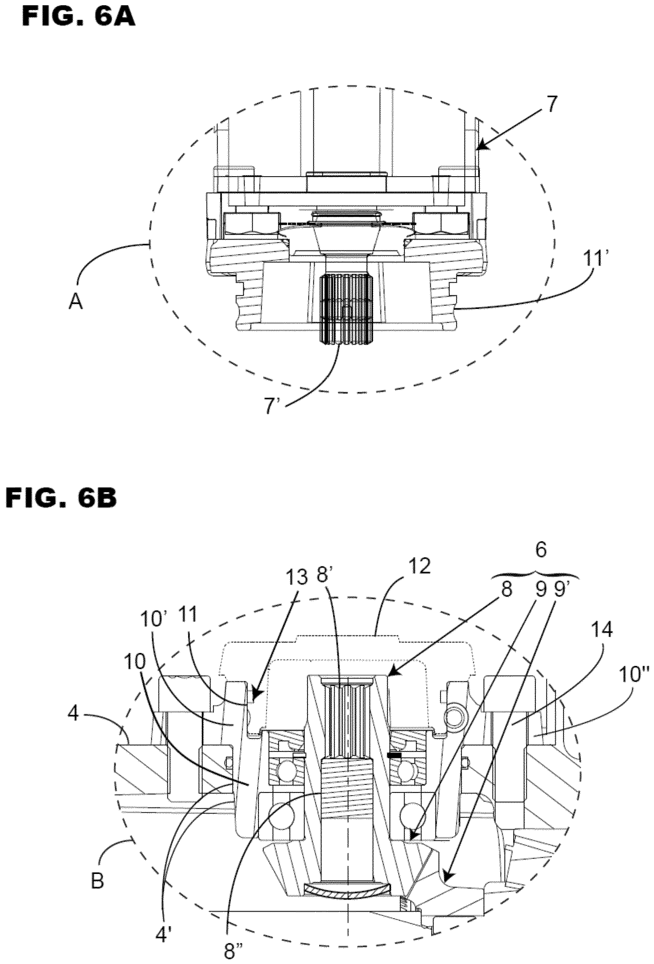

Un possible mode de réalisation du système 13 de raccord rapide (éventuellement associé à un moyen d'étanchéité) pour l'assemblage d'un équipement annexé 7 avec le carter 4 est représenté sur les figures 5B et 6B, les formations (rainures, retraits, ...) coopérantes de la partie de montage 11' complémentaire ressortant de la figure 6A.

On peut noter que le couvercle 12 présente avantageusement des formations identiques pour bénéficier également des moyens du système 13 intégrés à la partie de montage 11, en vue de sa fixation.

La figure 6B illustre un possible mode de réalisation de la pièce de palier sous la forme d'un manchon 10 (portant les roulements de guidage de l'arbre secondaire 8), monté dans l'ouverture latérale 4' du carter 4 et se prolongeant à l'extérieur de ce dernier par une portion tubulaire coaxiale 10' définissant la partie femelle 11 du dispositif de montage par emboîtement de l'équipement annexe ou secondaire 7.

Avantageusement, un épaulement intérieur formant butée d'emboîtement (éventuellement pourvue d'une rainure de calage) pour la partie de montage mâle 11' peut être prévu entre 10 et 10', au niveau de la partie femelle 11.

Comme le montre également la figure 6B, la pièce de palier 10, 10' peut présenter des oreilles latérales de fixation 10" permettant sa solidarisation amovible (par exemple par des vis 14) sur l'extérieur du carter 4 autour de l'ouverture 4'. Il est donc aisé de produire deux versions du carter 4 sur un même base constructive standardisée, à savoir avec et sans palier 10 et dispositif de transmission secondaire 6.

Cette flexibilité constructive s'ajoute à la flexibilité d'utilisation de la machine avec ou sans équipement annexe ou secondaire 7 (mise en place du couvercle 12 en cas d'absence), lorsque le dispositif 6 est présent.

L'homme du métier comprend que l'invention est applicable à de nombreux types de machines agricoles 1, en particulier des machines combinées.

Néanmoins, à titre d'application préférée, la machine 1 est constituée par une machine 1' de travail du sol, telle qu'une herse rotative, pouvant être associée structurellement et fonctionnellement à une autre machine agricole 1" réalisant un travail additionnel ou un traitement complémentaire, en particulier un semoir, préférentiellement portée par ladite herse 1'. Le semoir associé à la machine 1 peut être un semoir en lignes ou un semoir monogaine.

Dans l'exemple de réalisation représentée à la figure 3, la machine de base 1' est une herse rotative rigide et l'autre machine agricole 1" est un semoir en ligne à distribution de graines pneumatique.

Dans une construction alternative (non représentée), la machine 1' peut être constituée par une fraise rotative. Les outils d'une telle fraise rotative tournent autour d'un axe sensiblement horizontal.

La herse rotative et la fraise rotative sont toutes deux des machines 1' de travail du sol dont les outils sont animés par la prise de force du tracteur et auxquels peut être associée, sur le même bâti préférentiellement, au moins une autre machine 1" ou un autre équipement de traitement de sol.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques. Le domaine de protection de l'invention est définît par l'étendue des revendications.

## Revendications

1. Machine agricole (1) pourvue d'au moins un outil entraîné (2) et comprenant, d'une part, un arbre d'entrée (3) monté rotatif dans un carter support et de protection (4), qui est destiné à être relié par une extrémité (3') débouchant dudit carter (4) à une prise de force d'un tracteur et qui fait partie d'une ligne (3, 5, 5') de transmission de mouvement primaire, entraînant au moins ledit ou lesdits outil(s) (2), et, d'autre part, un dispositif (6) de transmission de mouvement secondaire avec démultiplication, relié cinématiquement à l'arbre d'entrée (3) et pouvant entraîner au moins un équipement secondaire, outil annexe ou système secondaire de distribution/transmission de mouvement (7), ledit arbre d'entrée (3) présentent un axe de rotation (AR), définissant une direction longitudinale,
dans laquelle ledit dispositif de transmission secondaire (6) est disposé dans le carter (4) et comprend un arbre de sortie secondaire (8) monté à rotation dans le carter (4) et un mécanisme de transmission démultipliée (9, 9') reliant cinématiquement l'arbre d'entrée (3) et l'arbre de sortie secondaire (8), une extrémité libre (8') dudit arbre secondaire (8) étant dirigée vers ou située au niveau d'une ouverture (4') du carter (4), **caractérisée en ce que** cette ouverture (4') est disposée latéralement par rapport à l'arbre d'entrée (3), et formée dans un côté latéral du carter (4), par rapport à la direction longitudinale définie par l'axe de rotation (AR) de l'arbre d'entrée (3).

2. Machine agricole selon la revendication 1, **caractérisée en ce que** le dispositif de transmission secondaire (6) est situé dans l'encombrement longitudinal de l'arbre d'entrée (3).

3. Machine agricole selon l'une quelconque des revendications 1 et 2, **caractérisée en ce que** l'axe de rotation (AR') dudit arbre secondaire (8) s'étend de manière inclinée par rapport à l'axe de rotation (AR).

4. Machine agricole selon l'une quelconque des revendications 1 à 3, **caractérisée en ce que** le mécanisme de transmission démultiplié (9, 9') est un mécanisme de transmission par engrènement, préférentiellement entre un premier élément denté (9) solidaire de l'arbre de sortie secondaire (8) et un second élément denté (9') solidaire de l'arbre d'entrée (3).

5. Machine agricole selon l'une quelconque revendication 1 à 4, **caractérisée en ce que** le mécanisme de transmission démultipliée est constitué par un système à engrenage comprenant un pignon denté (9) formé ou monté sur l'arbre de sortie secondaire (8), préférentiellement au niveau d'une extrémité (8") de ce dernier, et une couronne dentée (9') formée ou montée sur l'arbre d'entrée (3), ledit pignon (9) et ladite couronne (9') en engagement mutuel présentant avantageusement un engrenage conique.

6. Machine agricole selon l'une quelconque des revendications 1 à 5, **caractérisée en ce que** le carter (4) est pourvu d'un palier (10) de montage et de guidage en rotation de l'arbre de sortie secondaire (8), lequel se prolonge pour délimiter l'ouverture (4') dans laquelle s'étend l'extrémité libre (8') de l'arbre secondaire (8) destinée à être reliée en entraînement audit équipement secondaire, outil annexe ou système secondaire de distribution/transmission de mouvement (7), le palier (10) et l'arbre de sortie secondaire (8) étant décalés angulairement autour de l'axe (AR) de l'arbre d'entrée (3), avantageusement d'au moins 90°, préférentiellement d'environ 180°, par rapport aux autres composantes (5, 5') de la ligne de transmission de mouvement primaire, reliées cinématiquement à l'arbre d'entrée (3) et logées dans le carter (4).

7. Machine agricole selon l'une quelconque des revendications 1 à 6, **caractérisée en ce que** l'équipement secondaire, l'outil annexe ou le système secondaire de distribution/transmission de mouvement (7) est assemblé rigidement avec le carter (4) et solidarisé en rotation avec l'extrémité libre (8') de l'arbre secondaire (8) par l'intermédiaire d'un système de fixation rapide.

8. Machine agricole selon l'une quelconque des revendications 1 à 7, **caractérisée en ce que** l'équipement, outil ou système (7) secondaire ou annexe est assemblé rigidement avec le carter (4) et accouplé avec l'arbre de sortie secondaire (8) par le biais d'une liaison mécanique avec double emboîtement, ladite liaison étant préférentiellement verrouillée, avantageusement automatiquement et/ou de manière amovible.

9. Machine agricole selon les revendications 6 et 7 ou 8, **caractérisée en ce que** l'ouverture (4') du carter (4), délimitée par un prolongement tubulaire coaxial (10') du palier (10) de montage avec guidage, comporte une partie (11) de montage par emboîtement, avec possibilité de verrouillage amovible, destiné à coopérer avec une partie complémentaire coopérant (11') de l'équipement, de l'outil ou du système (7) secondaire ou annexe, et **en ce que** l'extrémité libre (8') de l'arbre de sortie secondaire (8) présente une structure cannelée axialement, mâle ou femelle, pour un assemblage par emboîtement avec un arbre ou un manchon d'entrée (7') dudit équipement, outil ou système (7) secondaire ou annexe.

10. Machine agricole selon l'une quelconque des revendications 6 à 9, **caractérisée en ce que** le carter (4) et l'extrémité libre (8') de l'arbre secondaire (8) présentent des sites femelles d'assemblage par emboitement avec des formations mâles complémentaires de partie (11') et d'arbre (7') de l'équipement, outil ou système (7) secondaire ou annexe.

11. Machine agricole selon l'une quelconque des revendications 1 à 10, **caractérisée en ce que** l'équipement secondaire (7) consiste en un moyen générateur de puissance, tel qu'une pompe hydraulique ou pneumatique ou une génératrice électrique.

12. Machine agricole selon l'une quelconque des revendications 1 à 11, **caractérisée en ce qu'**elle comprend un moyen (12) d'obturation de l'ouverture (4') du carter (4), du côté extérieur, tel qu'un couvercle à fermeture étanche ou analogue, sous forme d'élément séparé, relié ou non de manière flexible au carter (4), ou solidaire dudit carter (4), et apte à recouvrir également l'extrémité libre (8') de l'arbre secondaire (8).

13. Machine agricole selon l'une quelconque des revendications 1 à 12, **caractérisée en ce que** l'arbre de sortie secondaire (8) s'étend perpendiculairement à l'arbre d'entrée (3).

14. Machine agricole selon l'une quelconque des revendications 1 à 13, **caractérisée en ce que** le dispositif de transmission secondaire (6) est monté de manière amovible dans le carter (4).

15. Machine agricole selon l'une quelconque des revendications 1 à 14, **caractérisée en ce qu'**elle est constituée par une machine de travail du sol (1'), pouvant être associée structurellement et fonctionnellement à une autre machine agricole (1") réalisant un travail additionnel ou un traitement complémentaire, en particulier un semoir, préférentiellement portée par ladite herse (1').

## Patentansprüche

1. Landwirtschaftliche Maschine (1), die mit mindestens einem angetriebenen Gerät (2) versehen ist, und die zum einen eine Eingangswelle (3) umfasst, die drehbar in einem Stütz- und Schutzgehäuse (4) montiert ist, die dazu bestimmt ist, mit einem Ende (3'), das aus dem Gehäuse (4) herausragt, mit einer Zapfwelle eines Traktors verbunden zu werden, und die Teil eines primären Bewegungsübertragungsstrangs (3, 5, 5') ist, der mindestens das oder die Geräte (2) antreibt, und zum anderen eine sekundäre Bewegungsübertragungsvorrichtung (6) mit Übersetzung umfasst, die kinematisch mit der Eingangswelle (3) verbunden ist und mindestens eine Sekundäreinrichtung, ein Zusatzgerät oder ein Sekundärsystem zur Bewegungsverteilung/-übertragung (7) antreiben kann, wobei die Eingangswelle (3) eine Drehachse (AR) aufweist, die eine Längsrichtung definiert,
wobei die sekundäre Übertragungsvorrichtung (6) in dem Gehäuse (4) angeordnet ist und eine Nebenabtriebswelle (8), die drehbar in dem Gehäuse (4) montiert ist, und einen Übertragungsmechanismus mit Übersetzung (9, 9') umfasst, der die Eingangswelle (3) und die Nebenabtriebswelle (8) kinematisch miteinander verbindet, wobei ein freies Ende (8') der Nebenwelle (8) zu einer Öffnung (4') des Gehäuses (4) gerichtet ist oder sich daran befindet, **dadurch gekennzeichnet, dass** diese Öffnung (4') in Bezug zur Eingangswelle (3) seitlich angeordnet ist und in Bezug zur Längsrichtung, die von der Drehachse (AR) der Eingangswelle (3) definiert ist, in einer lateralen Seite des Gehäuses (4) gebildet ist.

2. Landwirtschaftliche Maschine nach Anspruch 1, **dadurch gekennzeichnet, dass** die sekundäre Übertragungsvorrichtung (6) sich in dem Längsbauraum der Eingangswelle (3) befindet.

3. Landwirtschaftliche Maschine nach einem der Ansprüche 1 und 2, **dadurch gekennzeichnet, dass** die Drehachse (AR') der Nebenwelle (8) sich in Bezug zur Drehachse (AR) geneigt erstreckt.

4. Landwirtschaftliche Maschine nach einem der Ansprüche 1 bis 3, **dadurch gekennzeichnet, dass** der Übertragungsmechanismus mit Übersetzung (9, 9') ein Übertragungsmechanismus durch Eingriff ist, vorzugsweise zwischen einem ersten Zahnelement (9), das fest mit der Nebenabtriebswelle (8) verbunden ist, und einem zweiten Zahnelement (9'), das fest mit der Eingangswelle (3) verbunden ist.

5. Landwirtschaftliche Maschine nach einem der Ansprüche 1 bis 4, **dadurch gekennzeichnet, dass** der Übertragungsmechanismus mit Übersetzung aus einem Zahnradsystem besteht, das ein Zahnritzel (9) umfasst, das an der Nebenabtriebswelle (8) gebildet oder daran montiert ist, vorzugsweise an einem Ende (8") letzterer, und einen Zahnkranz (9'), der an der Eingangswelle (3) gebildet oder daran montiert ist, wobei das Ritzel (9) und der Kranz (9'), die ineinander eingreifen, vorteilhafterweise eine Kegelverzahnung aufweisen.

6. Landwirtschaftliche Maschine nach einem der Ansprüche 1 bis 5, **dadurch gekennzeichnet, dass** das Gehäuse (4) mit einem Lager (10) zur Montage und drehbaren Führung der Nebenabtriebswelle (8) versehen ist, das sich verlängert, um die Öffnung (4') zu begrenzen, in der sich das freie Ende (8') der Nebenwelle (8) erstreckt, das dazu bestimmt ist, in Antriebsverbindung mit der Sekundäreinrichtung, dem Zusatzgerät oder Sekundärsystem zur Bewegungsverteilung/- übertragung (7) zu stehen, wobei das Lager (10) und die Nebenabtriebswelle (8) in Bezug zu anderen Komponenten (5, 5') des primären Bewegungsübertragungsstrangs, die kinematisch mit der Eingangswelle (3) verbunden sind und in dem Gehäuse (4) aufgenommen sind, winklig zur Achse (AR) der Eingangswelle (3) versetzt sind, vorteilhafterweise um mindestens 90°, vorzugsweise um ungefähr 180°.

7. Landwirtschaftliche Maschine nach einem der Ansprüche 1 bis 6, **dadurch gekennzeichnet, dass** die Sekundäreinrichtung, das Zusatzgerät oder das Sekundärsystem zur Bewegungsverteilung/-übertragung (7) starr mit dem Gehäuse (4) verbunden ist und mittels eines Schnellbefestigungssystems drehfest mit dem freien Ende (8') der Nebenwelle (8) verbunden ist.

8. Landwirtschaftliche Maschine nach einem der Ansprüche 1 bis 7, **dadurch gekennzeichnet, dass** die Sekundär- oder Zusatzeinrichtung bzw. das Sekundär- oder Zusatzgerät oder -system (7) starr mit dem Gehäuse (4) verbunden ist und mittels einer mechanischen Verbindung mit doppelter Verzapfung mit der Nebenabtriebswelle (8) gekoppelt ist, wobei die Verbindung vorzugsweise verriegelt ist, vorteilhafterweise auf automatische und/oder lösbare Weise.

9. Landwirtschaftliche Maschine nach Anspruch 6 und 7 oder 8, **dadurch gekennzeichnet, dass** die Öffnung (4') des Gehäuses (4), die von einer röhrenförmigen koaxialen Verlängerung (10') des Montagelagers (10) mit Führung begrenzt wird, einen Teil (11) zur Montage durch Verzapfung mit der Möglichkeit zur lösbaren Verriegelung umfasst, der dazu bestimmt ist, mit einem komplementären zusammenwirkenden Teil (11') der Sekundär- oder Zusatzeinrichtung bzw. des Sekundär- oder Zusatzgeräts oder -systems (7) zusammenzuwirken, und dadurch, dass das freie Ende (8') der Nebenabtriebswelle (8) eine axiale Keilstift- oder - buchsenstruktur zur Verbindung durch Verzapfung mit einer Eingangswelle oder einer Eingangshülse (7') der Sekundär- oder Zusatzeinrichtung bzw. des Sekundär- oder Zusatzgeräts oder -systems (7) aufweist.

10. Landwirtschaftliche Maschine nach einem der Ansprüche 6 bis 9, **dadurch gekennzeichnet, dass** das Gehäuse (4) und das freie Ende (8') der Nebenwelle (8) Buchsenstellen zur Verbindung durch Verzapfung mit komplementären Stiftausbildungen von Teil (11') und Welle (7') der Sekundär- oder Zusatzeinrichtung bzw. des Sekundär- oder Zusatzgeräts oder -systems (7) aufweisen.

11. Landwirtschaftliche Maschine nach einem der Ansprüche 1 bis 10, **dadurch gekennzeichnet, dass** die Sekundäreinrichtung (7) aus einem Leistungserzeugungsmittel besteht, wie beispielsweise einer hydraulischen oder pneumatischen Pumpe oder einem Stromgenerator.

12. Landwirtschaftliche Maschine nach einem der Ansprüche 1 bis 11, **dadurch gekennzeichnet, dass** sie ein Mittel (12) zum Verschließen der Öffnung (4') des Gehäuses (4) von der Außenseite umfasst, wie beispielsweise einen dicht schließenden Deckel oder Ähnliches, in Form eines Elements, das von dem Gehäuse (4) getrennt ist, das flexibel mit dem Gehäuse (4) verbunden ist oder nicht, oder das fest mit dem Gehäuse (4) verbunden ist, und dazu geeignet ist, auch das freie Ende (8') der Nebenwelle (8) abzudecken.

13. Landwirtschaftliche Maschine nach einem der Ansprüche 1 bis 12, **dadurch gekennzeichnet, dass** die Nebenabtriebswelle (8) sich senkrecht zur Eingangswelle (3) erstreckt.

14. Landwirtschaftliche Maschine nach einem der Ansprüche 1 bis 13, **dadurch gekennzeichnet, dass** die sekundäre Übertragungsvorrichtung (6) lösbar im Gehäuse (4) montiert ist.

15. Landwirtschaftliche Maschine nach einem der Ansprüche 1 bis 14, **dadurch gekennzeichnet, dass** sie aus einer Bodenbearbeitungsmaschine (1') besteht, die strukturell und funktionell mit einer anderen landwirtschaftlichen Maschine (1") verbunden sein kann, die eine zusätzliche Bearbeitung oder eine ergänzende Behandlung durchführt, insbesondere einer Sämaschine, die vorzugsweise von der Egge (1') getragen wird.

## Claims

1. Agricultural machine (1) provided with at least one driven implement (2) and comprising, on the one hand, an input shaft (3) mounted rotatably in a protective support housing (4), which is designed to be connected by one end (3') emerging from said housing (4) to a power take-off of a tractor and which forms part of a primary movement transmission line (3, 5, 5'), driving at least said implement or implements (2), and, on the other hand, a secondary movement transmission device (6) with gear reduction, kinematically connected to the input shaft (3) and capable of driving at least one item of secondary equipment, attached implement or secondary movement distribution/transmission system (7), said input shaft (3) having an axis of rotation (AR), defining a longitudinal direction, in which said secondary transmission device (6) is disposed in the housing (4) and comprises a secondary output shaft (8) mounted rotatably in the housing (4) and a geared-down transmission mechanism (9, 9') kinematically connecting the input shaft (3) and the secondary output shaft (8), a free end (8') of said secondary shaft (8) being directed towards or situated at the level of an opening (4') in the housing (4), **characterised in that** this opening (4') is disposed laterally in relation to the input shaft (3), and formed in a lateral side of the housing (4), in relation to the longitudinal direction defined by the axis of rotation (AR) of the input shaft (3).

2. Agricultural machine according to claim 1, **characterised in that** the secondary transmission device (6) is situated in the longitudinal dimension of the input shaft (3).

3. Agricultural machine according to any one of claims 1 and 2, **characterised in that** the axis of rotation (AR') of said secondary shaft (8) is inclined relative to the axis of rotation (AR).

4. Agricultural machine according to any one of claims 1 to 3, **characterised in that** the geared-down transmission mechanism (9, 9') is a mechanism of transmission by meshing, preferably between a first toothed element (9) integral with the secondary output shaft (8) and a second toothed element (9') integral with the input shaft (3).

5. Agricultural machine according to any one of claims 1 to 4, **characterised in that** the geared-down transmission mechanism consists of a meshing system comprising a toothed pinion (9) formed or mounted on the secondary output shaft (8), preferably at the level of one end (8") of the latter, and a toothed crown (9') formed or mounted on the input shaft (3), said opinion (9) and said crown (9') in mutual engagement advantageously exhibiting bevel gearing.

6. Agricultural machine according to any one of claims 1 to 5, **characterised in that** the housing (4) is provided with a bearing (10) for rotational mounting and guiding of the secondary output shaft (8), which is extended in order to delimit the opening (4') in which extends the free end (8') of the secondary shaft (8) designed to be connected in driving relationship to said secondary equipment, attached implement or secondary movement distribution/transmission system (7), the bearing (10) and the secondary output shaft (8) being offset angularly about the axis (AR) of the input shaft (3), advantageously by at least 90°, preferably by approximately 180°, relative to the other components (5, 5') of the line of primary movement transmission, which are kinematically connected to the input shaft (3) and accommodated in the housing (4).

7. Agricultural machine according to any one of claims 1 to 6, **characterised in that** the secondary equipment, attached implement or secondary movement distribution/transmission system (7) is assembled rigidly with the housing (4) and rigidly connected in rotation to the free end (8') of the secondary shaft (8) by means of a quick fastening system.

8. Agricultural machine according to any one of claims 1 to 7, **characterised in that** the secondary or attached equipment, implement or system (7) is assembled rigidly with the housing (4) and coupled to the secondary output shaft (8) by means of a mechanical link with double interlocking, said link being preferably locked, advantageously automatically and/or removably.

9. Agricultural machine according to claims 6 and 7 or 8, **characterised in that** the opening (4') in the housing (4), delimited by a coaxial tubular extension (10') of the mounting bearing (10) with guiding, comprises a part (11) for mounting by interlocking, with the possibility of removable locking, designed to cooperate with a complementary cooperating part (11') of the secondary or attached equipment, implement or system (7), and **in that** the free end (8') of the secondary output shaft (8) has a male or female axially splined structure, for assembly by interlocking with an input shaft or sleeve (7') of said secondary or attached equipment, implement or system (7).

10. Agricultural machine according to any one of claims 6 to 9, **characterised in that** the housing (4) and the free end (8') of the secondary shaft (8) have female sites for assembly by interlocking with complementary male formations of the part (11') and shaft (7') of the secondary or attached equipment, implement or system (7).

11. Agricultural machine according to any one of claims 1 to 10, **characterised in that** the secondary equipment (7) consists of a power generating means such as a hydraulic or pneumatic pump or an electric generator.

12. Agricultural machine according to any one of claims 1 to 11, **characterised in that** it comprises a means (12) for blocking the opening (4') in the housing (4), from the outside, such as a cover with sealed closure or the like, in the form of a separate element which may or may not be connected flexibly to the housing (4), or integral with said housing (4), and capable of also covering the free end (8') of the secondary shaft (8).

13. Agricultural machine according to any one of claims 1 to 12, **characterised in that** the secondary output shaft (8) extends perpendicularly to the input shaft (3).

14. Agricultural machine according to any one of claims 1 to 13, **characterised in that** the secondary transmission device (6) is mounted removably in the housing (4).

15. Agricultural machine according to any one of claims 1 to 14, **characterised in that** it consists of a machine for tilling the soil (1'), which may be associated structurally and functionally with another agricultural machine (1") which performs additional tillage or complementary treatment, in particular a seed drill, preferably carried by said harrow (1').
